(19) Europäisches Patentamt
European Patent Office
Office européen des brevets

(11) **EP 1 201 359 B1**

(12) **EUROPEAN PATENT SPECIFICATION**

(45) Date of publication and mention
of the grant of the patent:
**25.07.2007 Bulletin 2007/30**

(51) Int Cl.:
*B24B 9/14* (2006.01)  *B24B 13/005* (2006.01)
*G02C 13/00* (2006.01)  *G01M 11/02* (2006.01)

(21) Application number: **01124143.7**

(22) Date of filing: **10.10.2001**

(54) **Method for centering an spectacle lens and attaching the same to a holder, manufacturing method and apparatus therefor**

Verfahren zum Zentrieren einer Brillenlinse und zum Montieren derselbe auf einen Halter, Herstellungsverfahren und Vorrichtung

Procédé pour center une lentille de lunettes et pour son montage sur un support, son procédé de fabrication et dispositif associé

(84) Designated Contracting States:
**AT BE CH CY DE DK ES FI FR GB GR IE IT LI LU MC NL PT SE TR**

(30) Priority: **23.10.2000 JP 2000322790**

(43) Date of publication of application:
**02.05.2002 Bulletin 2002/18**

(73) Proprietor: **HOYA CORPORATION
Shinjuku-ku,
Tokyo 161-8525 (JP)**

(72) Inventors:
• **Akiyama, Hisanori,
c/o Hoya Corporation
Tokyo, 161-8525 (JP)**
• **Jinbo, Masahiro,
c/o Hoya Corporation
Tokyo, 161-8525 (JP)**
• **Samukawa, Masahiko,
c/o Hoya Corporation
Tokyo, 161-8525 (JP)**
• **Yoda, Toshiro,
c/o Hoya Corporation
Tokyo, 161-8525 (JP)**

(74) Representative: **Kuhnen & Wacker
Patent- und Rechtsanwaltsbüro
Prinz-Ludwig-Strasse 40A
85354 Freising (DE)**

(56) References cited:
EP-A- 0 990 484    DE-A- 3 144 179
US-A- 5 210 695    US-A- 5 638 169
US-A- 5 844 671

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

1. Field of the Invention

The present invention relates to a method for obtaining a position of an optical center of a spectacle lens according to the preambule of claim 1 and an apparatus to carry out this method according to claim 6.

2. Related Prior Art

DE3144179A1 (D2) discloses a method and an apparatus for obtaining a position of an optical center of a spectacle lens whereby the prism deflection amounts of a lens are measured during the movement thereof. Measuring values are returned back to a driver stage in order to realize a closed or feedback loop control.

From US-A-5,844,671 a lens meter is known having a measuring optical system, which comprises a device for measuring an optical characteristics continuously, a device for introducing the lens to the desired position relation for a measuring optical axis in the measuring optical system on the basis of the measured data, a device for generating the alignment ending signal when the alignment is achieved to the predetermined standard level, a device for judging whether the measured data is stable within a predetermined permissible range of variation, and a device for storing the measured data of the lens based on the judgment result. This known apparatus further comprises a device for designating which the left or right lens should be measured, a device for generating the signal for reading and storing the measured data, a device for storing the measurement result, a device for detecting whether the lens exists on the measuring optical axis, and a device for judging the changing-over of the left to right of the lens. This known apparatus further comprises a device for changing-over a mode to measure an additive diopter in the progressive multi focus lens, a device for inputting which the lens is for left or right, a device for detecting a displacement of a measuring position, a device for conducting to a right and left reference axis of the lens, a device for conducting a measuring position closed to the near viewing section from the far viewing section, and a device for displacing the measuring position closed to the near viewing section to the predetermined nose position.

When according to this known apparatus the lens is mounted on the nosepiece, the microcomputer calculates a refractive power, and each measured data of spherical power, cylindrical power, cylindrical axial angle and prism degree is obtained. The measured data are respectively displayed at a measured data displaying section on a display. The measurement is executed successively in a predetermined interval, then the value of the measured data displaying section is always renewed and displayed corresponding to the variation of the value.

A spectacle glass is prepared by processing an uncut spectacle lens (in general, a so-called round lens having a circular shape) into a shape fitting the Shape of a spectacle frame and fitting the cut lens into the spectacle frame. To prepare the spectacle glass, it is necessary that the layout be conducted for deciding the position of the optical center based on the data of the prescription on the eye of the person who is to wear the spectacle glass (the dioptric power, the cylindrical dioptric power, the distance between the right and left eyes and the like other data) and the data on the shape of the spectacle frame selected by the person who is to wears the spectacle glass. The layout is conducted essentially for bringing the optical center (in the case of a single vision lens) or the eye point (in the case of a multifocal lens) of the spectacle lens at the position of the pupil center of the person who is to wear the spectacle glass after it has been prepared.

In general, when a person wanting to wear a spectacle frame selected by this person, it is rather seldom that the geometrical center of the shape of the spectacle frame comes to a position corresponding to the pupil center of the person. Therefore, when an uncut lens is processed simply in a manner such that the geometrical center of the shape formed by the processing (the shape of the spectacle frame) is brought at the position of the optical center of the lens in the processing of the uncut lens into a shape fitting the shape of the spectacle frame, a problem arises in that the pupil center will be placed at a position deviating from the position corresponding to the optical center or the eyepoint of the spectacle lens when the spectacle glass is completed by fitting the processed lens into the spectacle frame. It is necessary that the optical center will be displaced from the position of the geometrical center and brought at the position corresponding to the pupil center.

When the layout has been conducted, an uncut lens (a prescribed lens) which satisfies the conditions for the above layout and the prescriptions for the person who wants to wear the spectacle glass and can be processed is selected and the processing of the uncut lens is conducted. The processing of the uncut lens is conducted by using an apparatus for processing a lens which grinds edge portions of the uncut lens by a grinder or a cutter while the uncut lens is rotated around a specific axis approximately perpendicular to the optical face of the uncut lens. For processing the uncut lens by the apparatus for processing a lens, a lens holder which is a jig used as the rotational center axis of the uncut lens is attached to the uncut lens in advance.

Heretofore, the lens holder has been attached at the position of the optical center in the case of a single-vision lens. In the case of a progressive multifocal lens or a multifocal lens (in general, a bifocal lens), the lens holder is attached at the position of the eyepoint of the lens. Therefore, it is necessary that the position of the optical center he obtained by measurement so that the optical properties (the dioptric power and other properties) of the uncut lens are confirmed to satisfy the conditions of the prescription and the position for attaching the lens holder is obtained.

The measurement of the optical center of an uncut lens has been conducted by using a lens meter which is used for measuring optical properties of a lens such as the dioptric power and the prism dioptric power. In this measurement, the position of the optical center is obtained by measuring the prism value using the lens meter at positions considered to be close to the optical center and finding out the position where the prism value becomes zero or by calculating the position of the optical center in accordance with a specific equation using the prism value obtained by the measurement.

Problem to be Solved by the Invention

However, it is very complicated and difficult that the prism value is visually measured at positions considered to be close to the optical center using a lens meter and the position showing the value of the prism value of zero is found out. Moreover, it is not always possible that the accurate position of the optical center is found out. The method of obtaining the position of the optical center in accordance with a specific equation using the prism value obtained by the measurement has a problem in that the accuracy is varying depending on the position of the measurement. The error is great when the position of the measurement is far from the true position of the optical center although the error is small when the position of the measurement is close to the true position of the optical center.

Recently, it has been found that, when a spectacle frame having some type of a shape is used, the processing cannot be conducted in accordance with the method of attaching a lens holder at the optical center. As the preference of the persons who wear spectacle glasses diversifies, spectacle frames having shapes having very small sizes in the vertical direction are occasionally used. When a spectacle frame has a vertical size smaller than a specific value and a lens holder is attached to the optical center, the processing interference takes place in that a portion of the outer periphery of the lens holder is at the outside of the shape of the spectacle frame (the shape to be formed by the processing) and the processing becomes impossible.

The present invention has been made under the above circumstances and has for its object of providing a method for measuring the optical center of a spectacle lens in accordance with which the accurate position of the optical center can be obtained efficiently, a method for attaching a lens holder to a spectacle lens, in accordance with which the position for attaching a lens holder without the processing interference can be obtained efficiently and the lens holder can be attached to the spectacle lens and an apparatus for attaching a lens holder to a spectacle lens having the above characteristics.

According to the present invention the above object is solved by the features of claim 1.

Improved embodiments of the inventive method result from subclaims 2 to 5.

In connection with the inventive apparatus the above object is solved by the features of claim 6.

The inventive method is realized on the basis of the following steps:

measuring optical properties at a first position of the spectacle lens using a lens meter for measuring the optical properties of the spectacle lens, the optical properties including a prism value;

calculating the position of the optical center of the spectacle lens based on values obtained by the measurement of the optical properties at the first position in accordance with a specific relational equation and setting the position obtained by the calculation as a first position for calculation of the optical center;

when a distance between the first position and the first position for calculation of the optical center is equal to a specific value or smaller than the specific value, deciding the first position for calculation of the optical center as the position of the optical center,

when the distance between the first position and the first position for calculation of the optical center exceeds the specific value, measuring the optical properties at the first position for calculation of the optical center using the lens meter and calculating a second position for calculation of the optical center based on values obtained by the measurements in accordance with the specific relational equation;

when a distance between the first position for calculation of the optical center and the second position for calculation of the optical center is equal to the specific value or smaller than the specific value, deciding the second position for calculation of the optical center as the position of the optical center;

when the distance between the first position for calculation of the optical center and the second position for calculation of the optical center exceeds the specific value, measuring the optical properties at the second position for calculation of the optical center using the lens meter and calculating a third position for calculation of the optical center based on values obtained by the measurements in accordance with the specific relational equation;

conducting further steps in a similar manner to those conducted in the above steps in which it is checked whether a distance between successive positions for calculation of the optical center does not exceed the specific value; and

when a distance between an (n-1)-th position for calculation of the optical center and an n-th position for calculation of the optical center is equal to the specific value or smaller than the specific value, deciding the n-th position for calculation of the optical center as the position of the optical center of the spectacle lens.

As a second aspect, the present invention provides a method for attaching a lens holder to an uncut lens, the lens holder being a jig attached to the uncut lens in advance as a rotational center axis of the uncut lens during a process of grinding an edge of a spectacle lens, the method comprising the steps of:

measuring optical properties at a first position of the uncut lens using a lens meter for measuring the optical properties of the uncut lens, the optical properties including a prism value;

calculating the position of the optical center of the uncut lens based on values obtained by the measurement of the optical properties at the first position in accordance with a specific relational equation and setting the position obtained by the calculation as a first position for calculation of the optical center;

when a distance between the first position and the first position for calculation of the optical center is equal to a specific value or smaller than the specific value, deciding the first position for calculation of the optical center as the position of the optical center and the first position as a position for attaching the lens holder;

when the distance between the first position and the first position for calculation of the optical center exceeds the specific value, measuring the optical properties at the first position for calculation of the optical center using the lens meter and calculating a second position for calculation of the optical center based on values obtained by the measurements in accordance with the specific relational equation;

when a distance between the first position for calculation of the optical center and the second position for calculation of the optical center is equal to the specific value or smaller than the specific value, deciding the second position for calculation of the optical center as the position of the optical center and the first position for calculation of the optical center as the position for attaching the lens holder;

when the distance between the first position for calculation of the optical center and the second position for calculation of the optical center exceeds the specific value, measuring the optical properties at the second position for calculation of the optical center using the lens meter and calculating a third position for calculation of the optical center based on values obtained by the measurements in accordance with the specific relational equation;

conducting further steps in a similar manner to those conducted in the above steps in which it is checked whether a distance between successive positions for calculation of the optical center does not exceed the specific value; and

when a distance between an (n-1)-th position for calculation of the optical center and an n-th position for calculation of the optical center is equal to the specific value or smaller than the specific value, deciding the n-th position for calculation of the optical center as the position of the optical center of the spectacle lens and the (n-1)-th position for calculation of the optical center as the position for attaching the lens holder.

As a third aspect, the present invention provides a method for attaching a lens holder according to the second aspect of the present invention, which further comprises a step of checking whether processing would be possible based on processing information including a shape to be formed by processing the uncut lens and a shape of a lens buildup area of the lens holder when it is assumed that the lens holder would be attached at the decided position for attaching the lens holder and the processing is conducted.

As a fourth aspect, the present invention provides a method for attaching a lens holder according to any one of the second aspect and the third aspect of the present invention, wherein information on positions obtained during procedures ranging from the decision of the first position to the decision of the position for attaching the lens holder is kept in a transmittable condition so that the information can be used as process control information in a processing apparatus of a numerical control type.

As a fifth aspect, the present invention provides an apparatus for attaching a lens holder to an uncut lens, the lens holder being a jig attached to the uncut lens in advance as a rotational center axis of the uncut lens during a process of grinding an edge of a spectacle lens, the apparatus comprising:

a computer;

a lens meter for measuring optical properties of the uncut lens which is connected to the computer in a manner such that necessary information can be exchanged, the optical properties including a prism value; and

a movable table on which the uncut lens for the measurement by the lens meter is disposed and which moves to a desired position in accordance with specific control information, can measure a position of itself and output information on the position and is connected to the computer in a manner such that necessary information can be exchanged: the computer being formed for information processing so as to

output a control command to the lens meter and the movable table so that optical properties of the uncut lens are measured at a first position under the control;

for calculating a position of an optical center of the uncut lens based on values obtained by the measurement of the optical properties at the first position in accordance with a specific relational equation and for setting the position obtained by the calculation as a first position for calculation of the optical center; and

when a distance between the first position and the first position for calculation of the optical center is equal to a specific value or smaller than the specific value, for deciding the first position for calculation of the optical center as the position of the optical center and the first position as a position for attaching the lens holder; and

when the distance between the first position and the first position for calculation of the optical center exceeds the specific value, for measuring the optical properties at the first position for calculation of the optical center using the lens meter and for calculating a second position for calculation of the optical center based on values obtained by the measurements in accordance with the specific relational equation; and

when a distance between the first position for calculation of the optical center and the second position for calculation of the optical center is equal to the specific value or smaller than the specific value, for deciding the second position for calculation of the optical center as the position of the optical center and the first position for calculation of the optical center as the position for attaching the lens holder; and

when the distance between the first position for calculation of the optical center and the second position for calculation of the optical center exceeds the specific value, for measuring the optical properties at the second position for calculation of the optical center using the lens meter and for calculating a third position for calculation of the optical center based on values obtained by the measurements in accordance with the specific relational equation; and for conducting further steps in a similar manner to those conducted in the above steps in which it is checked whether a distance between successive positions for calculation of the optical center does not exceed the specific value: and

when a distance between an (n-1)-th position for calculation of the optical center and an n-th position for calculation of the optical center is equal to the specific value or smaller than the specific value, for deciding the n-th position for calculation of the optical center as the position of the optical center of the spectacle lens and the (n-1)-th position for calculation of the optical center as the position for attaching the lens holder.

Brief Description of Drawings

Fig. 1    shows a diagram describing a method for obtaining the position of the optical center of a spectacle lens and a method for attaching a lens holder of a spectacle lens as embodiments of the present invention;

Fig.    2 shows a diagram exhibiting the entire construction of an apparatus for attaching a lens holder of a spectacle lens as an embodiment of the present invention;

Fig. 3    shows a diagram exhibiting the measurement using a lens meter;

Fig. 4    shows a diagram exhibiting attachment of a lens holder to an uncut lens using a lens blocking apparatus; and

Fig. 5    shows a diagram exhibiting attachment of a lens holder to an uncut lens using a lens blocking apparatus.

Preferred Embodiments of the Invention

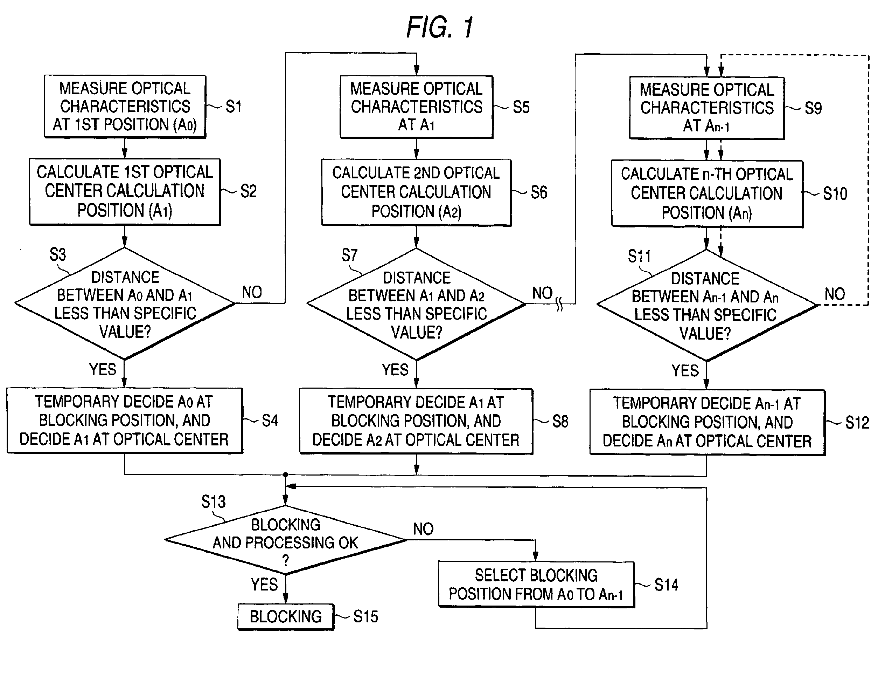

Figure 1 shows a diagram describing a method for obtaining the position of the optical center of a spectacle lens and a method for attaching a lens holder of a spectacle lens according to embodiments of the present invention.

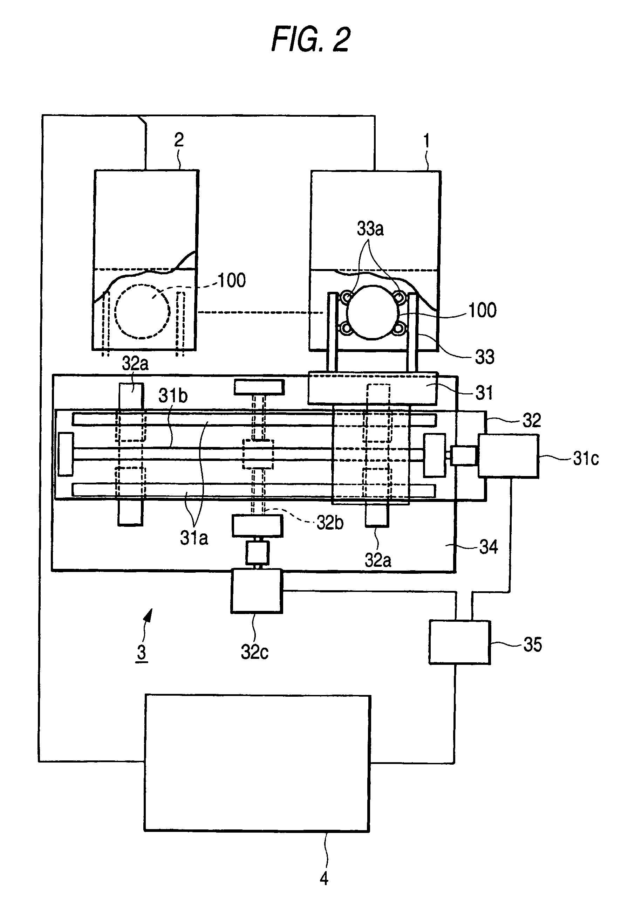

Figure 2 shows a diagram exhibiting the entire construction of an apparatus for attaching a lens holder of a spectacle lens according to an embodiment of the present invention.

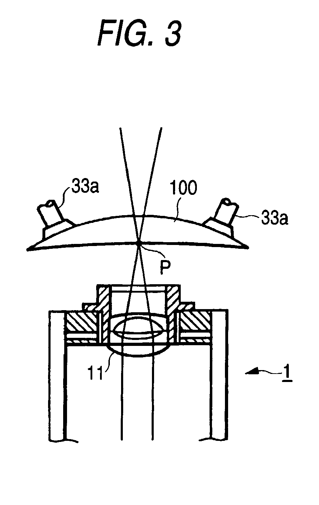

Figure 3 shows a diagram exhibiting the measurement using a lens meter.

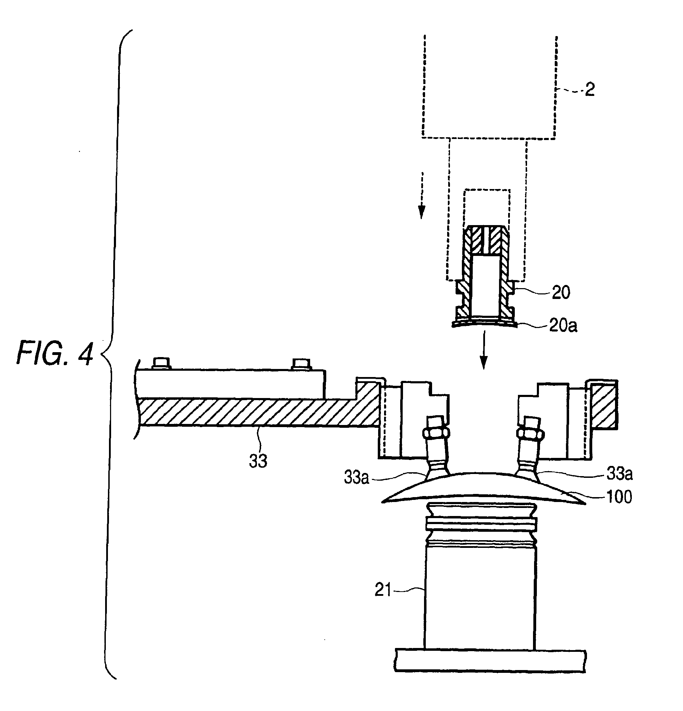

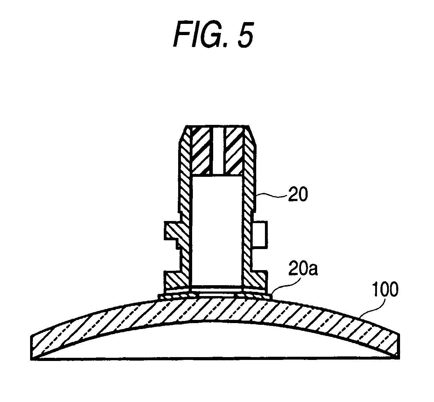

Figures 4 and 5 show diagrams exhibiting attachment of a lens holder to an uncut lens using a lens blocking apparatus.
The method for obtaining a position of an optical center of a spectacle lens, the method for attaching a lens holder to a spectacle lens and the apparatus for attaching a lens holder to a spectacle lens as the embodiments of the present invention will be described with reference to the above Figures.
As shown in Figure 1, the method for obtaining the position of the optical center of a spectacle lens and the method for attaching a lens holder to a spectacle lens according to the embodiments of the present invention comprise steps 1 to 12. These steps essentially include setting and measuring the position of the uncut lens with using an X-Y table which is a movable table, measurements using a lens meter and a blocking operation by a blocking apparatus. Therefore, the apparatus for attaching a lens holder to a spectacle lens comprising these apparatuses and a computer will be described first and then the method for measuring the optical center of the spectacle lens and the method for attaching a lens holder to the spectacle lens using the apparatus will be described later.
In Figure 2, a lens meter 1, a blocking apparatus 2 and an X-Y table 3 are connected to a computer 4 in a manner that information can be exchanged and the necessary control of movements and treatments of information is made by the computer.
The lens meter 1 is a conventional apparatus for measuring optical properties of an uncut lens 100 such as the spherical dioptric power, the cylindrical dioptric power, the angle of the cylinder axis and the prism value. As shown in Figure 3, a light for the measurement is focussed at the position of measurement P of the unprocessed lens, i.e., the uncut lens, 100 via a collimator lens 11. The light passed through the unprocessed lens 100 is lead to an optical system for the measurement which is not shown in Figure 3 and the optical properties are obtained.
As shown in Figures 4 and 5, the blocking apparatus 2 is a conventional apparatus which supports a lens holder 20 and pushes the lens holder 20 to the surface of the unprocessed lens 100 via an elastic seal 20a to attach the lens holder there. The unprocessed lens 100 is held by a portion for holding a lens 33 of the X-Y table 3 and placed on a table for placing a lens 21 at a position fixed in a manner such that the central axis of the lens holder 20 is placed exactly at the position for attachment on the unprocessed lens 100. Then, the lens holder is attached to the unprocessed lens.
The X-Y table 3 holds the unprocessed lens 100 by the command from the computer 4 by suction using suction apparatuses for holding a lens 33a which are disposed at the portion for holding a lens 33 and controls the positions by moving the unprocessed lens and bringing specific positions on the unprocessed lens 100 exactly at the position of measurement of the lens meter 1 and the position of attachment of the blocking apparatus 2. The X-Y table also has the function of transmitting information on the positions to the computer 4.
The portion for holding a lens 33 is disposed on an X table 31. The X table 31 is disposed in a manner such that the X table can move freely in the X-direction on two rails 31a disposed on a Y table 32. The movement of the X table is controlled by rotating a screw shaft 31b by a driving pulse motor 31c. The screw shaft 31b is screwed into the X table 31 and attached to the Y table 32 in a manner such that the screw shaft 31b can freely rotate. The Y table 32 is disposed on a base table 34 in a manner such that the Y table can freely move in the Y-direction on two rails 32 disposed on the base table 34. The movement of the Y table is controlled by rotating a screw shaft 32b by a driving pulse motor 32c. The screw shaft 32b is screwed into the Y table 32 and attached to the base table 34 in a manner such that the screw shaft 32b can freely rotate. The X motor 31c and the Y motor 32c are connected to the computer 4 via a controller 35.
The computer 4 transmits necessary control signals to the lens meter 1, the blocking apparatus 2 and the X-Y table 3, conducts calculations for obtaining the optical center of the lens, decides the position of attaching the lens holder and controls the above apparatuses based on the results. Specifically, the computer controls the apparatuses so that the following steps are performed.

(Step S1)

The optical properties of the unprocessed lens, i.e., the uncut lens, 100 at the first position A0 are measured by the lens meter. In this step, the unprocessed lens 100 supplied from an apparatus for supplying an unprocessed lens which is not shown in the Figure is held by the suction apparatuses 33a of the portion for holding a lens 33 of the X-Y table 3 and fixed at a position in a manner such that the first position of the unprocessed lens 100 is placed at the portion for measurement of the lens meter 1. Then, a command is transmitted to the lens meter 1 and the optical properties of the unprocessed lens such as the spherical dioptric power, the cylindrical dioptric power, the angle of the cylinder axis and the prism amount are measured. For example, the position of the geometrical center is selected as the first position described above.

(Step 2)

The optical properties of the unprocessed lens 100 such as the spherical dioptric power, the cylindrical dioptric power, the angle of the cylinder axis and the prism amount which have been obtained by the lens meter are transmitted into the computer 4 and the position of the optical center is obtained by calculation based on these values. Specifically, the values of the optical properties are input into the following equation (1) for obtaining the deviation of the position of the measurement from the optical center:

$$\begin{pmatrix} hx \\ hy \end{pmatrix} = -\begin{pmatrix} A' & B' \\ C' & D' \end{pmatrix}\begin{pmatrix} Px \\ Py \end{pmatrix} \tag{1}$$

wherein

hx: the deviation in the X-direction
hy: the deviation in the Y-direction
Px: the prism amount in the X-direction
Py: the prism amount in the Y-direction

$$A' = \frac{S + C\cos^2\theta}{S(S+C)}$$

$$B' = \frac{C\sin\theta\cos\theta}{S(S+C)}$$

$$C' = \frac{C\sin\theta\cos\theta}{S(S+C)}$$

$$D' = \frac{S + C\sin^2\theta}{S(S+C)}$$

S: the spherical dioptric power
C: the cylindrical dioptric power
θ: the angle of the cylinder axis

The deviation of the position of the measurement, i.e., the first position, from the optical center is calculated. The optical center thus obtained is set as the first position for calculation of the optical center A1.

(Steps S3 and S4)

The distance (the deviation) between the first position A0 and the first position for calculation of the optical center A1 is obtained by the computer 4. Then, it is checked by the computer 4 whether the distance does (not) exceed a specific value (Step 3). When the distance is equal to the specific value or smaller than the specific value, the procedure advances to Step 4. The first position for calculation of the optical center A1 is decided as the position of the optical center and the first position A0 is temporarily decided as the position for attaching the lens holder. The specific value is, for example, 0.01 mm as the prism amount. This value is suitably selected based on the allowable value of the distance between the optical center of the lens and the position of the pupil of the person who is to wear the spectacle glass when the spectacle lens is fitted into the spectacle frame.

(Step S5)

When the distance between the first position A0 and the first position for calculation of the optical center A1 (the deviation) exceeds the specific value, the procedure advances to step S5. The position of the measurement by the lens meter is changed from A0 to A1 and the prism value and the other values are obtained in accordance with similar procedures to those conducted in step S1.

(Step S6)

The spherical dioptric power, the cylindrical dioptric power, the angle of the cylinder axis and the prism amount at the position A1 of the unprocessed lens 100 which are obtained by the above lens meter 1 are transmitted into the computer 4 in accordance with similar procedures to those as in step S2 and the position of the optical center will be obtained by calculation based on these values. The obtained optical center is set as the second position for calculation of the optical center A2.

(Steps S7 and S8)

The distance between the first position for calculation of the optical center A1 and the second position for calculation of the optical center A2 (the deviation) is obtained in accordance with similar procedures to those as in step S3. Then, it is checked whether the distance does not exceed the specific value (Step 7). When the distance is the same as the specific value or smaller, the procedure advances to Step 8.
The second position for calculation of the optical center A2 is decided as the position of the optical center and the first position for calculation of the optical center A1 is temporarily decided as the position for attaching the lens holder (Step S8).

(Step S9)

When the distance between the first position for calculation of the optical center A1 and the second position for calculation of the optical center A2 exceeds the specific value, similar procedures to those conducted in steps S5 to S7 are conducted. In other words, the prism value and the other values are obtained at the (n-1)-th position for calculation of the optical center An-1.

(Steps S 10 to S 12)

The prism value and the other values obtained as above are input into the above equation (1) and the n-th position for calculation of the optical center An will be obtained by calculation (step S10). Then, the distance between the (n-1)-th position for calculation of the optical center An-1 and the n-th position for calculation of the optical center An (the deviation) will be obtained in accordance with similar procedures to those as in steps S3 and S7. Then, it is checked whether the distance does (not) exceed the specific value (step S11). When this distance is equal to the specific value or smaller than the specific value, the procedure advances to Step 12. The n-th position for calculation of the optical center An is decided as the position of the optical center and the (n-1)-th position for calculation of the optical center An-1 is temporarily decided as the position for attaching the lens holder (Step S8). When the distance between the (n-1)-th position for calculation of the optical center An-1 and the n-th position for calculation of the optical center An (the deviation) exceeds the specific value, the procedure returns to step S9 and similar procedures are conducted until the above distance becomes equal to the specific value or smaller than the specific value.

(Step S13)

When the procedures of step S4, S8 or S12 is completed, the procedure advances to step 13. In step S13, it is examined whether the processing interference would take place when it is assumed that the lens holder would be blocked to the lens at the position temporarily decided as the position for the blocking. In other words, using the data of the shape of the spectacle frame, the data of prescription and the data of the shape (the diameter) of the lens holder, it is examined whether the processing interference would take place when it is assumed that the lens holder would be blocked to the lens at the position temporarily decided as the position for the blocking.

(Step S14)

When it is estimated in the above step 13 that the processing interference would take place, a temporary position for the blocking is selected from the positions A0 to An-1 which have been obtained by the measurements and the position of the geometrical center of the shape of the spectacle frame in place of the temporary position decided above. The procedure returns to step S13 and the same examination is conducted until the processing interference is estimated to be absent.

(Step 15)

When it is estimated in step S14 that the processing interference would not take place, the procedure advances to step 15 and the blocking is conducted. The unprocessed lens 100 held by the X-Y table is transferred to the blocking apparatus. The position of attaching (blocking) the above unprocessed lens is brought to the blocking position of the blocking apparatus and the blocking is conducted. The arrangement is made so that the information on the decided positions such as the position of the optical center and the blocking position is transferred to the processing apparatus as a part of the processing data used in the processing of the lens.

In accordance with the above methods, since the distance between the optical center and the finally decided position of the measurement is the same as the specific value or smaller, the optical constants and the position of the optical center are accurately and efficiently obtained. Since it is examined in advance whether the processing at the blocking position is possible and the blocking is conducted after the blocking position without the processing interference is obtained, an efficient blocking can be achieved.

As described above, the present invention provides a method for obtaining the position of the optical center of a spectacle lens in steps of:

measuring optical properties at a first position of the spectacle lens using a lens meter for measuring the optical properties of the spectacle lens, the optical properties including a prism value;

calculating the position of the optical center of the spectacle lens with using values obtained by the measurement of the optical properties at the first position in accordance with a specific relational equation and setting the position obtained by the calculation as a first position for calculation of the optical center;

when a distance between the first position and the first position for calculation of the optical center is equal to a specific value or smaller than the specific value, deciding the first position for calculation of the optical center as the position of the optical center;

when the distance between the first position and the first position for calculation of the optical center exceeds the specific value, measuring the optical properties at the first position for calculation of the optical center using the lens meter and calculating a second position for calculation of the optical center based on values obtained by the measurements in accordance with the specific relational equation;

when a distance between the first position for calculation of the optical center and the second position for calculation of the optical center is equal to the specific value or smaller than the specific value, deciding the second position for calculation of the optical center as the position of the optical center;

when the distance between the first position for calculation of the optical center and the second position for calculation of the optical center exceeds the specific value, measuring the optical properties at the second position for calculation of the optical center using the lens meter and calculating a third position for calculation of the optical center based on values obtained by the measurements in accordance with the specific relational equation;

conducting further steps in a similar manner to those conducted in the above steps in which it is checked whether a distance between successive positions for calculation of the optical center does not exceed the specific value; and

when a distance between an (n-1)-th position for calculation of the optical center and an n-th position for calculation of the optical center is equal to the specific value or smaller than the specific value, deciding the n-th position for calculation of the optical center as the position of the optical center of the spectacle lens.

In accordance with the above method, the optical center can be accurately and efficiently obtained and the lens holder can be attached after the position without the processing interference is efficiently obtained.

List of reference signs

1: A lens meter;
2: A blocking apparatus;
3: An X-Y table;
4: A computer ; and
100: An uncut lens.

**Claims**

1. A method for obtaining a position of an optical center of a spectacle lens (100) comprising the steps of:

measuring (S1) optical properties at a first position of the spectacle lens (100) using a lens meter (1) for measuring the optical properties of the spectacle lens (100), the optical properties including a prism value;
calculating (S2) the position of the optical center of the spectacle lens (100) with using values obtained by the measurement of the optical properties at the first position in accordance with a specific relational equation and setting the position obtained by the calculation as a first position for calculation of the optical center;

**characterized by**
when a distance between the first position and the first position for calculation of the optical center is equal to a specific value or smaller than the specific value, deciding (S4) the first position for calculation of the optical center as the position of the optical center;
when the distance between the first position and the first position for calculation of the optical center exceeds said specific value (S3), measuring (S5) the optical properties at the first position for calculation of the optical center using the lens meter (1) and calculating (S6) a second position for calculation of the optical center based on values obtained by the measurements in accordance with the specific relational equation;
when a distance between the first position for calculation of the optical center and the second position for calculation of the optical center is equal to the specific value or smaller than said specific value (S7), deciding (S8) the second position for calculation of the optical center as the position of the optical center;
when the distance between the first position for calculation of the optical center and the second position for calculation of the optical center exceeds said specific value (S7), measuring (S9) the optical properties at the second position for calculation of the optical center using the lens meter (1) and calculating (S10) a third position for calculation of the optical center based on values obtained by the measurements in accordance with the specific relational equation;
conducting further steps in a similar manner to those conducted in the above steps in which it is checked whether a distance between successive positions for calculation of the optical center does not exceed said specific value; and
when a distance between an (n-1)-th position for calculation of the optical center and an n-th position for calculation of the optical center is equal to the specific value or smaller than the specific value, deciding (S12) the n-th position for calculation of the optical center as the position of the optical center of the spectacle lens.

2. A method according to claim 1, **characterized by** the application of said method for attaching a lens holder (20) to an uncut lens (100), the lens holder being a jig attached to the uncut lens (100) in advance as a rotational center axis of the uncut lens (100) during a process of grinding an edge of a spectacle lens.

3. A method according to claim 2, which further comprises a step of checking whether processing would be possible based on processing information including a shape to be formed by processing the uncut lens (100) and a shape of a lens buildup area of the lens holder (20) when it is assumed that the lens holder (20) would be attached at the decided position for attaching the lens holder (20) and the processing is conducted.

4. A method according to claim 1 or 2, wherein information on positions obtained during procedures ranging from the decision of the first position to the decision of the position for attaching the lens holder (20) is kept in a transmittable condition so that the information can be used as process control information in a processing apparatus of a numerical control type.

5. A method for producing a spectacle lens, which includes the method steps described in any one of claims 1 to 4.

6. An apparatus for attaching a lens holder (20) to an uncut lens (100), the lens holder (20) being a jig attached to the uncut lens (100) in advance as a rotational center axis of the uncut lens (100) during a process of grinding an edge of a spectacle lens, the apparatus comprising:

a computer (4);
a lens meter (1) for measuring optical properties of the uncut lens (100) which is connected to the computer (4) in a manner such that necessary information can be exchanged, the optical properties including a prism value; and
a movable table (3) on which the uncut lens (100) for the measurement by the lens meter (1) is disposed and which moves to a desired position in accordance with specific control information, and is formed for measuring a position of itself and output information on the position and is connected to the computer (4) in a manner such that necessary information can be exchanged; the computer (4) being formed for information processing so as to output a control command to the lens meter (1) and the movable table (3) so that optical properties of the uncut lens (100) can be measured at a first position under the control; and for calculating a position of an optical center of the uncut lens (100) based on values obtained by the measurement of the optical properties at the first position in accordance with a specific relational equation and for setting the position obtained by the calculation as a first position for calculation of the optical center; and
when a distance between the first position and the first position for calculation of the optical center is equal to a specific value or smaller than the specific value, for deciding the first position for calculation of the optical center as the position of the optical center and the first position as a position for attaching the lens holder (20); and
when the distance between the first position and the first position for calculation of the optical center exceeds the specific value, for measuring the optical properties at the first position for calculation of the optical center using the lens meter (1) and for calculating a second position for calculation of the optical center based on values obtained by the measurements in accordance with the specific relational equation; and
when a distance between the first position for calculation of the optical center and the second position for calculation of the optical center is equal to the specific value or smaller than the specific value, for deciding the second position for calculation of the optical center as the position of the optical center and the first position for calculation of the optical center as the position for attaching the lens holder (20); and
when the distance between the first position for calculation of the optical center and the second position for calculation of the optical center exceeds the specific value, for measuring the optical properties at the second position for calculation of the optical center using the lens meter (1) and for calculating a third position for calculation of the optical center based on values obtained by the measurements in accordance with the specific relational equation; and for conducting further steps in a similar manner to those conducted in the above steps in which it is checked whether a distance between successive positions for calculation of the optical center does not exceed the specific value; and
when a distance between an (n-1)-th position for calculation of the optical center and an n-th position for calculation of the optical center is equal to the specific value or smaller than the specific value, for deciding the n-th position for calculation of the optical center as the position of the optical center of the spectacle lens and the (n-1)-th position for calculation of the optical center as the position for attaching the lens holder (20).

**Patentansprüche**

1. Verfahren zum Ermitteln einer Position eines optischen Mittelpunkts einer Brillenlinse (100), welches die folgenden Schritte umfasst:

Messen (S1) optischer Eigenschaften an einer ersten Position der Brillenlinse (100) unter Verwendung eines Linsenmessers (1) zum Messen der optischen Eigenschaften der Brillenlinse (100), wobei die optischen Eigenschaften einen Prismenwert einschließen;

Berechnen (S2) der Position des optischen Mittelpunkts der Brillenlinse (100) unter Verwendung von Werten, die durch die Messung der optischen Eigenschaften an der ersten Position gemäß einer spezifischen relationalen Gleichung erhalten werden, und Setzen der durch die Berechnung erhaltenen Position als erste Berechnungsposition des optischen Mittelpunkts;

**gekennzeichnet durch**

Bestimmen (S4) der ersten Berechnungsposition des optischen Mittelpunkts als Position des optischen Mittelpunkts, falls ein Abstand zwischen der ersten Position und der ersten Berechnungsposition des optischen Mittelpunkts bei einem spezifischen Wert oder unter einem spezifischen Wert liegt;

Messen (S5) der optischen Eigenschaften an der ersten Berechnungsposition des optischen Mittelpunkts unter Verwendung des Linsenmessers (1), falls der Abstand zwischen der ersten Position und der ersten Berechnungsposition des optischen Mittelpunkts den spezifischen Wert übertrifft (S3), und Berechnen (S6) einer zweiten Berechnungsposition des optischen Mittelpunkts auf der Basis der durch die Messungen erhaltenen Werte gemäß der spezifischen relationalen Gleichung;

Bestimmen (S8) der zweiten Berechnungsposition des optischen Mittelpunkts als Position des optischen Mittelpunkts, falls ein Abstand zwischen der ersten Berechnungsposition des optischen Mittelpunkts und der zweiten Berechnungsposition des optischen Mittelpunkts bei dem spezifischen Wert oder unter dem spezifischen Wert liegt;

Messen (S9) der optischen Eigenschaften an der zweiten Berechnungsposition des optischen Mittelpunkts unter Verwendung des Linsenmessers (1), falls der Abstand zwischen der ersten Berechnungsposition des optischen Mittelpunkts und der zweiten Berechnungsposition des optischen Mittelpunkts den spezifischen Wert übertrifft (S7), und Berechnen (S10) einer dritten Berechnungsposition des optischen Mittelpunkts auf der Basis von Werten, die **durch** die Messungen erhalten wurden, gemäß der spezifischen relationalen Gleichung,

Ausführen weiterer Schritte auf ähnliche Weise wie die obigen Schritte, in denen geprüft wird, ob der Abstand zwischen aufeinander folgenden Berechnungspositionen des optischen Mittelpunkts den spezifischen Wert nicht übertrifft; und

Bestimmen (S 12) der n. Berechnungsposition des optischen Mittelpunkts als Position des optischen Mittelpunkts der Brillenlinse, falls ein Abstand zwischen einer (n-1). Berechnungsposition des optischen Mittelpunkts und einer n. Position des optischen Mittelpunkts bei dem spezifischen Wert oder unter dem spezifischen Wert liegt.

2. Verfahren nach Anspruch 1, **gekennzeichnet durch** die Anwendung des Verfahrens zur Befestigung eines Linsenhalters (20) auf einen Linsenrohling (100), wobei es sich bei dem Linsenhalter um eine Spanneinrichtung handelt, die im Voraus an dem Linsenrohling (100) als Drehmittenachse des Linsenrohlings (100) während des Beschleifens eines Randes einer Brillenlinse befestigt wird.

3. Verfahren nach Anspruch 2, das ferner einen Schritt zum Prüfen, ob eine Bearbeitung möglich wäre, auf der Basis von Bearbeitungsinformationen einschließlich einer Gestalt, die durch Bearbeiten des Linsenrohlings (100) gebildet werden soll, und einer Gestalt einer Linsenaufbaufläche des Linsenhalters (20), umfasst, wenn angenommen wird, dass der Linsenhalter (20) an der bestimmten Position zur Befestigung des Linsenhalters (20) befestigt wird und die Bearbeitung durchgeführt wird.

4. Verfahren nach Anspruch 1 oder Anspruch 2, wobei Positionsinformationen, die während Vorgängen, die von der Bestimmung der ersten Position bis zur Bestimmung der Position zur Befestigung des Linsenhalters (20) reichen, in einem übertragbaren Zustand gehalten werden, so dass die Informationen als Prozesssteuerinformationen in einem numerisch gesteuerten Bearbeitungsapparat verwendet werden kann.

5. Verfahren zum Herstellen einer Brillenlinse, das die in einem der Ansprüche 1 bis 4 beschriebenen Verfahrensschritte beinhaltet.

6. Apparat zur Befestigung eines Linsenhalters (20) an einem Linsenrohling (100), wobei der Linsenhalter (20) eine Spanneinrichtung ist, die im Voraus an dem Linsenrohling (100) als Drehmittenachse des Linsenrohlings (100) während eines Beschleifens eines Randes einer Brillenlinse befestigt wird, wobei der Apparat folgendes aufweist:

einen Computer (4);

einen Linsenmesser (1) zur Messung optischer Eigenschaften des Linsenrohlings (100), der mit dem Computer (4) solchermaßen verbunden ist, dass notwendige Informationen ausgetauscht werden können; wobei die optischen Eigenschaften einen Prismenwert einschließen; und

einen beweglichen Tisch (3), auf dem der Linsenrohling (100) zur Vermessung durch den Linsenmesser (1) angeordnet wird und der sich entsprechend spezifischen Steuerinformationen an eine gewünschte Position bewegt und so gebildet ist, dass er seine eigene Position misst und Informationen über die Position ausgibt, und mit dem Computer (4) solchermaßen verbunden ist, dass notwendige Informationen ausgetauscht werden können;

wobei der Computer (4) so gebildet ist, dass er Informationen verarbeitet, um einen Steuerbefehl an den Linsenmesser (1) und den beweglichen Tisch (3) auszugeben, so dass optische Eigenschaften des Linsenrohlings (100) an einer ersten Position unter der Steuerung gemessen werden können; und dass er eine Position eines optischen Mittelpunkts des Linsenrohlings (100) auf der Basis von Werten, die durch die Messung der optischen Eigenschaften an der ersten Position entsprechend einer spezifischen relationalen Gleichung erhalten werden, berechnet die durch die Berechnung erhaltene Position als erste Berechnungsposition des optischen Mittelpunkts setzt; und

dass er die erste Berechnungsposition des optischen Mittelpunkts als Position des optischen Mittelpunkts und die erste Position als Position zur Befestigung des Linsenhalters (20) bestimmt, falls ein Abstand zwischen der ersten Position und der ersten Berechnungsposition des optischen Mittelpunkts bei einem spezifischen Wert oder unter einem spezifischen Wert liegt; und

dass er die optischen Eigenschaften an der ersten Berechnungsposition des optischen Mittelpunkts unter Verwendung des Linsenmessers (1) misst, falls der Abstand zwischen der ersten Position und der ersten Berechnungsposition des optischen Mittelpunkts den spezifischen Wert übertrifft (S3), und eine zweite Berechnungsposition des optischen Mittelpunkts auf der Basis der durch die Messungen erhaltenen Werte gemäß der spezifischen relationalen Gleichung berechnet; und

dass er die zweite Berechnungsposition des optischen Mittelpunkts als Position des optischen Mittelpunkts bestimmt und die erste Berechnungsposition des optischen Mittelpunkts als Position zur Befestigung des Linsenhalters (20) bestimmt, falls ein Abstand zwischen der ersten Berechnungsposition des optischen Mittelpunkts und der zweiten Berechnungsposition des optischen Mittelpunkts bei dem spezifischen Wert oder unter dem spezifischen Wert liegt; und

dass er die optischen Eigenschaften an der zweiten Berechnungsposition des optischen Mittelpunkts unter Verwendung des Linsenmessers (1) misst, falls der Abstand zwischen der ersten Berechnungsposition des optischen Mittelpunkts und der zweiten Berechnungsposition des optischen Mittelpunkts den spezifischen Wert übertrifft (S7), und eine dritte Berechnungsposition des optischen Mittelpunkts auf der Basis von Werten, die durch die Messungen erhalten wurden, gemäß der spezifischen relationalen Gleichung berechnet; und

dass er weitere Schritte auf ähnliche Weise wie die obigen Schritte durchführt, in denen geprüft wird, ob der Abstand zwischen aufeinander folgenden Berechnungspositionen des optischen Mittelpunkts den spezifischen Wert nicht übertrifft; und

dass er die n. Berechnungsposition des optischen Mittelpunkts als Position des optischen Mittelpunkts der Brillenlinse bestimmt und die (n-1). Berechnungsposition des optischen Mittelpunkts als Position zur Befestigung des Linsenhalters (20) bestimmt, falls ein Abstand zwischen einer (n-1). Berechnungspositionen des optischen Mittelpunkts und einer n. Berechnungsposition des optischen Mittelpunkts bei dem spezifischen Wert oder unter dem spezifischen Wert liegt.

**Revendications**

1. Procédé pour obtenir une position d'un centre optique d'un verre de lunettes (100) comprenant les étapes suivantes :

mesurer (S1) des propriétés optiques au niveau d'une première position du verre de lunettes (100) en utilisant un dispositif de mesure de verre (1) pour mesurer les propriétés optiques du verre de lunettes (100), les propriétés optiques comprenant une valeur de prisme ;
calculer (S2) la position du centre optique du verre de lunettes (100) en utilisant des valeurs obtenues par la mesure des propriétés optiques au niveau de la première position en conformité avec une équation de relation spécifique et en réglant la position obtenue par le calcul comme une première position pour le calcul du centre optique ;

**caractérisé par**
lorsqu'une distance entre la première position et la première position pour le calcul du centre optique est égale à une valeur spécifique ou inférieure à la valeur spécifique, décider (S4) la première position pour le calcul du centre optique comme étant la position du centre optique;
lorsque la distance entre la première position et la première position pour le calcul du centre optique dépasse ladite valeur spécifique (S3), mesurer (S5) les propriétés optiques au niveau de la première position pour le calcul du centre optique en utilisant le dispositif de mesure de verre (1) et calculer (S6) une deuxième position pour le calcul du centre optique sur la base des valeurs obtenues par les mesures en conformité avec l'équation de relation spécifique;

lorsqu'une distance entre la première position pour le calcul du centre optique et la deuxième position pour le calcul du centre optique est égale à la valeur spécifique ou inférieure à ladite valeur spécifique (S7), décider (S8) la deuxième position pour le calcul du centre optique comme étant la position du centre optique ;

lorsque la distance entre la première position pour le calcul du centre optique et la deuxième position pour le calcul du centre optique dépasse ladite valeur spécifique (S7), mesurer (S9) les propriétés optiques au niveau de la deuxième position pour le calcul du centre optique en utilisant le dispositif de mesure de verre (1) et calculer (S10) une troisième position pour le calcul du centre optique sur la base des valeurs obtenues par les mesures en conformité avec l'équation de relation spécifique ;

effectuer d'autres étapes d'une manière similaire à celles effectuées dans les étapes ci-dessus dans lesquelles il est vérifié si une distance entre des positions successives pour le calcul du centre optique ne dépasse pas ladite valeur spécifique ; et

lorsqu'une distance entre une (n-1) ème position pour le calcul du centre optique et une n-ème position pour le calcul du centre optique est égale à la valeur spécifique ou inférieure à la valeur spécifique, décider (S12) la n-ème position pour le calcul du centre optique comme étant la position du centre optique du verre de lunettes.

2.  Procédé selon la revendication 1, **caractérisé par** l'application dudit procédé pour fixer un élément de maintien de verre (20) sur un verre non coupé (100), l'élément de maintien de verre étant un dispositif de serrage fixé au verre non coupé (100) en avance comme un axe de centre de rotation du verre non coupé (100) pendant un processus de meulage d'un bord d'un verre de lunettes.

3.  Procédé selon la revendication 2, qui comprend en outre une étape consistant à vérifier si le traitement serait possible sur la base d'informations de traitement comprenant une forme à façonner en traitant le verre non coupé (100) et une forme d'une zone de construction de verre de l'élémënt de maintien de verre (20) lorsqu'il est assumé que l'élément de maintien de verre (20) serait fixé au niveau de la position décidée pour fixer l'élément de maintien de verre (20) et le traitement est effectué.

4.  Procédé selon la revendication 1 ou 2, dans lequel des informations sur des positions obtenues pendant des procédures se trouvant entre la décision de la première position jusqu'à la décision de la position pour fixer l'élément de maintien de verre (20) sont maintenues dans une condition pouvant être transmise de telle sorte que les informations peuvent être utilisées comme des informations de contrôle de processus dans un appareil de traitement d'un type de contrôle numérique.

5.  Procédé de production d'un verre de lunettes, qui comprend les étapes de procédé décrites dans l'une quelconque des revendications 1 à 4.

6.  Appareil pour fixer un élément de maintien de verre (20) sur un verre non coupé (100), l'élément de maintien de verre (20) étant un dispositif de serrage fixé au verre non coupé (100) en avance comme un axe de centre de rotation du verre non coupé (100) pendant un processus de meulage d'un bord d'un verre de lunettes, l'appareil comprenant:

    un ordinateur (4) ;
    un dispositif de mesure de verre (1) pour mesurer des propriétés optiques du verre non coupé (100) qui est connecté à l'ordinateur (4) d'une manière telle que des informations nécessaires peuvent être échangées, les propriétés optiques comprenant une valeur de prisme ; et
    une table mobile (3) sur laquelle le verre non coupé (100) pour la mesure par le dispositif de mesure de verre (1) est disposé et qui se déplace vers une position souhaitée en conformité avec des informations de contrôle spécifiques et est formée pour mesurer une position d'elle-même et émettre en sortie des informations sur la position et est connectée à l'ordinateur (4) d'une manière telle que des informations nécessaires peuvent être échangées ; l'ordinateur (4) étant formé pour un traitement d'informations de telle sorte à émettre en sortie une commande de contrôle au dispositif de mesure de verre (1) et à la table mobile (3) de telle sorte que les propriétés optiques du verre non coupé (100) peuvent être mesurées au niveau d'une première position sous le contrôle ;
    et pour calculer une position d'un centre optique du verre non coupé (100) sur la base des valeurs obtenues par la mesure des propriétés optiques au niveau de la première position en conformité avec une équation de relation spécifique et pour régler la position obtenue par le calcul comme une première position pour le calcul du centre optique ; et

lorsqu'une distance entre la première position et la première position pour le calcul du centre optique est égale à une valeur spécifique ou inférieure à la valeur spécifique, pour décider la première position pour le calcul du centre optique comme la position du centre optique et la première position comme une position pour fixer l'élément de maintien de verre (20) ; et

lorsque la distance entre la première position et la première position pour le calcul du centre optique dépasse la valeur spécifique, pour mesurer les propriétés optiques au niveau de la première position pour le calcul du centre optique en utilisant le dispositif de mesure de verre (1) et pour calculer une deuxième position pour le calcul du centre optique sur la base des valeurs obtenus par les mesures en conformité avec l'équation de relation spécifique ; et

lorsqu'une distance entre la première position pour le calcul du centre optique et la deuxième position pour le calcul du centre optique est égale à la valeur spécifique ou inférieure à la valeur spécifique, pour décider la deuxième position pour le calcul du centre optique comme étant la position du centre optique et la première position pour le calcul du centre optique comme étant la position pour fixer l'élément de maintien de verre (20) ; et

lorsque la distance entre la première position pour le calcul du centre optique et la deuxième position pour le calcul du centre optique dépasse la valeur spécifique, pour mesurer les propriétés optiques au niveau de la deuxième position pour le calcul du centre optique en utilisant le dispositif de mesure de verre (1) et pour calculer une troisième position pour le calcul du centre optique sur la base des valeurs obtenues par les mesures en conformité avec l'équation de relation spécifique ; et pour effectuer des étapes supplémentaires d'une manière similaire à celles effectuées dans les étapes ci-dessus dans lesquelles il est vérifié si une distance entre des positions successives pour le calcul du centre optique ne dépasse pas la valeur spécifique ; et

lorsqu'une distance entre une (n-1) ème position pour le calcul du centre optique et une n-ème position pour le calcul du centre optique est égale à la valeur spécifique ou inférieure à la valeur spécifique, pour décider la n-ème position pour le calcul du centre optique comme étant la position du centre optique du verre de lunettes et la (n-1) ème position pour le calcul du centre optique comme étant la position pour fixer l'élément de maintien de verre (20).

EP 1 201 359 B1

*FIG. 1*

MEASURE OPTICAL CHARACTERISTICS AT 1ST POSITION ($A_0$) — S1

CALCULATE 1ST OPTICAL CENTER CALCULATION POSITION ($A_1$) — S2

S3 — DISTANCE BETWEEN $A_0$ AND $A_1$ LESS THAN SPECIFIC VALUE? — NO / YES

TEMPORARY DECIDE $A_0$ AT BLOCKING POSITION, AND DECIDE $A_1$ AT OPTICAL CENTER — S4

MEASURE OPTICAL CHARACTERISTICS AT $A_1$ — S5

CALCULATE 2ND OPTICAL CENTER CALCULATION POSITION ($A_2$) — S6

S7 — DISTANCE BETWEEN $A_1$ AND $A_2$ LESS THAN SPECIFIC VALUE? — NO / YES

TEMPORARY DECIDE $A_1$ AT BLOCKING POSITION, AND DECIDE $A_2$ AT OPTICAL CENTER — S8

MEASURE OPTICAL CHARACTERISTICS AT $A_{n-1}$ — S9

CALCULATE $n$-TH OPTICAL CENTER CALCULATION POSITION ($A_n$) — S10

S11 — DISTANCE BETWEEN $A_{n-1}$ AND $A_n$ LESS THAN SPECIFIC VALUE? — NO / YES

TEMPORARY DECIDE $A_{n-1}$ AT BLOCKING POSITION, AND DECIDE $A_n$ AT OPTICAL CENTER — S12

S13 — BLOCKING AND PROCESSING OK? — NO / YES

SELECT BLOCKING POSITION FROM $A_0$ TO $A_{n-1}$ — S14

BLOCKING — S15

16

# FIG. 2

# FIG. 3

*FIG. 4*

## FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 3144179 A1
- US 5844671 A